(19) Europäisches Patentamt

European Patent Office

Office européen des brevets

(11) **EP 1 619 584 A1**

(12) **EUROPEAN PATENT APPLICATION**

(43) Date of publication:
25.01.2006 Bulletin 2006/04

(51) Int Cl.:
*G06F 12/02* (2006.01)

(21) Application number: 04290405.2

(22) Date of filing: 13.02.2004

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Jaluna SA**
**78180 Montigny-le-Bretonneux (FR)**

(72) Inventors:
• **Boule, Ivan**
**75011 Paris (FR)**
• **Lebée, Pierre**
**60800 Crépy eu Valois (FR)**

(74) Representative: **Musker, David Charles et al**
**R.G.C. Jenkins & Co.**
**26 Caxton Street**
**London SW1H 0RJ (GB)**

(54) **Memory allocation**

(57) There is provided a method of managing a data memory in order to improve the processing of memory allocation requests. Memory segments are associated with different levels according to their size. A different granule size to the power of two is defined for each level. The granule size defines the range of segment sizes associated with each level. A multiple-stage bitmap is provided which indicates which of the levels contains free segments and the size of free segments. The bitmap is updated each time a memory segment is freed or allocated. Thereby, a deterministic "Best Fit" approach is provided which permits the allocation and release of memory segments at both task and interrupt level and which reduces memory fragmentation.

Fig. 6

## Description

The present invention relates to a method of processing requests for the allocation of a memory block of a data memory, and to a method of managing a data memory.

## Background Art

Memory allocators are used by operation systems to allocate free memory upon request from an application. In hardware using a Page Memory Management Unit (PMMU), the memory is divided into fixed-sized memory pages. Accordingly, a simple way of allocating memory is the allocation of free fixed-sized memory pages. One drawback of this approach is that it is inflexible , especially in applications requiring the allocation of small and large memory block. As a consequence, memory is wasted.

In general, there are different approaches to deal with the problem of memory allocation. One approach is called "First Fit". It is fast but wastes memory. An example is to allocate memory segments the size of which is the upper power of two value nearest to the requested size. For example, satisfying a request for 2049 bytes results in the allocation of 4096 bytes. Thus, 2047 bytes are wasted. This causes memory fragmentation. After hundreds or thousands of memory allocations and releases, free segments are scattered across the memory and it becomes more difficult to allocate large enough segments, because free segments are small and disjointed, although there is sufficient memory left.

Another approach is called "Best Fit". In this approach, memory wastage is limited, but a segment allocation requires all free segments to be searched in order to select that segment whose size comes closest to that of the requested memory block. This approach addresses fragmentation issues but is not deterministic.

Realtime operating systems require a fast allocation and low fragmentation of memory. In addition, memory allocation and release should be performable at task and interrupt level. In the latter case, both response time and determinism are crucial. At present, conventional "First Fit" and "Best Fit" algorithms do not satisfy these requirements.

There is thus a need for an improved method of managing memory allocation requests. The present invention aims to address this need.

## Summary of Invention

According to one aspect of the invention, there is provided a method of processing requests for the allocation of a memory block of a data memory, wherein segments of the data memory are allocated to different levels according to their size, the method comprising the steps of: (a) receiving a request for the allocation of a memory block; (b) determining the lowest of said levels containing a segment of the same size as or larger than the requested memory block; (c) determining, in the level determined in step (b), the availability of a free segment of a size the same as or larger than the requested memory block; and (d) depending on the determination in step (c), allocating a free segment.

According to another aspect of the invention, there is provided a method of managing a data memory, the method comprising: defining a number of levels of the data memory; defining a different granule size for each level; defining a different range of a plurality of different sizes of memory segments for each level, wherein the size of each memory segment is related to the granule size of the respective level, and wherein a request for the allocation of a memory block is processable by determining a level containing segments of the same size as or larger than the requested memory block, and allocating a free segment of a size the same as or larger than the requested memory block in that level.

According to another aspect of the invention, there is provided a method of managing a data memory comprising memory segments of different sizes for allocation in response to memory allocation requests, the method comprising: creating a first doubly linked list of consecutive memory segments irrespective of size and status (free, allocated); and creating a second doubly linked list of free memory segments of the same size.

According to another aspect of the invention, there is provided a method of managing a data memory, the method comprising: allocating free segments of the data memory to different levels according to their size; and providing a bitmap comprising different stages, wherein the bits of one stage are indicative of the availability of free segments in said levels, and the bits of another stage are indicative of the state and/or size and/or location of free segments. In particular, a last stage of the bitmap is directly indicative of the state of segments and of the size and location of free segments.

According to another aspect of the invention, there is provided a method of managing a data memory, including freeing and allocating segments of the data memory, the method comprising, when freeing a memory segment: determining the state of memory segments adjacent to the memory segment to be freed; and merging the memory segment to be freed with free adjacent memory segments.

According to another aspect of the invention, there is provided an operating system for a computer, adapted to perform any of the above methods.

According to another aspect of the invention, there is provided a computer program adapted to perform any of the above methods when operated on a computer.

According to another aspect of the invention, there is provided a storage medium having stored thereon a set of instructions, which when executed by a computer, performs any of the above methods.

According to another aspect of the invention, there is provided a computer system programmed to perform any of the above methods.

According to another aspect of the invention, there is provided a processor arranged to perform any of the above methods.

An algorithm according to an embodiment of the invention provides for a deterministic "Best Fit" approach for allocating and freeing memory segments at both task and interrupt level, thereby to reduce memory fragmentation and to improve efficiency in managing the memory. In particular, the algorithm does away with loops when scanning the memory for free segments, thereby providing determinism and predictability. The algorithm can be implemented using any processor. Also, the algorithm can be implemented using hardware or software. The invention aims to minimize wasted memory. For request sizes greater than 640 bytes, the percentage of wasted memory is less than 5%.

**Brief Description of the Drawings**

An exemplary embodiment of the invention is described hereinbelow with reference to the drawings, of which:

Figure 1 illustrates the range of segment sizes of a first level of a data memory;
Figure 2 a three-stage bitmap for indicating the state of memory segments;
Figure 3 a deterministic "Best Fit" memory segment allocation algorithm;
Figure 4 an algorithm to determine bitmap indexes;
Figure 5 an algorithm to find set bits of the bitmap indicative of a free segment;
Figure 6 a data structure used in the "Best Fit" memory allocation algorithm;
Figure 7 a deterministic "Best Fit" memory segment release algorithm;
Figure 8 a first doubly linked list linking memory segments; and
Figure 9 first and second doubly linked lists linking memory segments and free memory segments of the same size, respectively.

**Detailed Description of an Embodiment**

According to an embodiment of the present invention, an algorithm is provided which is characterised by allocating memory segments from different levels according to their size, using a different granule size (power of two) for each level, and using a multiple-stage bitmap in order to increase the speed when dealing with requests for the allocation of memory blocks.

More particularly, memory segments are allocated from seven levels according to their size. An range of acceptable segment sizes is defined for each level. In particular, a granule size is defined for each level, and 255 fixed different segment sizes are defined as multiples of the granule size. The largest supported segment size for a given level is

$$maxSegSize = 2^N = 256 \times G$$

where G is the granule size of the level.

Each level represents a table containing pointers pointing to a list of free memory segments of the sizes defined for that level. Thus, there are up to 255 pointers in each table.

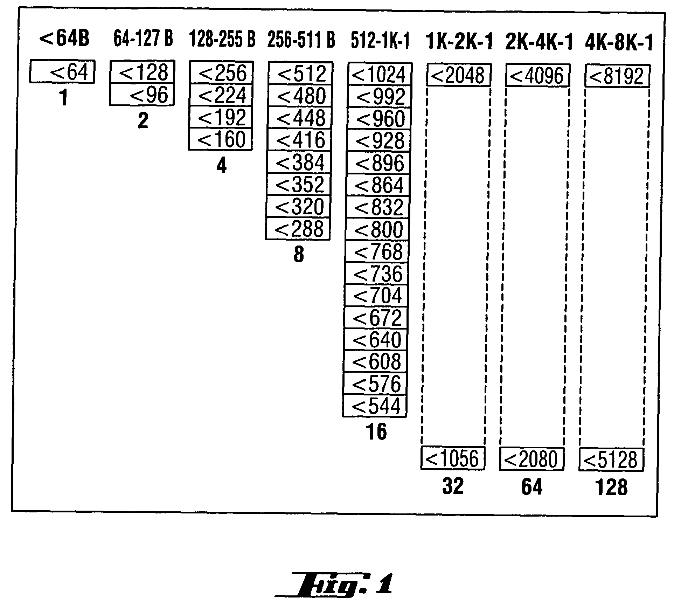

Figure 1 illustrates the sizes of memory segments defined for level 0. Level 0 has a granule size of 32 bytes. The size of segments of level 0 ranges from <64 bytes to <8192 bytes. There are 255 different segment sizes.

Table 1 indicates the granule size and memory segment size range for each level:

**Table 1: Granule size and memory segment size range according to level**

| Granule size | Memory segment size range | Level |
|---|---|---|
| 32 bytes | segment size of 1 to 8191 bytes | 0 |
| 128 bytes | segment size of 8 Kbytes to 64 Kbytes - 1 byte | 1 |
| 1 Kbyte | segment size of 64 Kbytes to 256 Kbytes - I byte | 2 |

Table continued

| Granule size | Memory segment size range | Level |
|---|---|---|
| 8 Kbytes | segment size of 256 Kbytes to 2 Mbytes -1 byte | 3 |
| 64 Kbytes | segment size of 2 Mbytes to 16 Mbytes - I byte | 4 |
| 512 Kbytes | segment size of 16 Mbytes to 128 Mbytes - 1 byte | 5 |
| 4 Mbytes | segment size of 128 Mbytes to 1 Gbyte - I byte | 6 |

Fragmentation is directly related to the granule sizes. The smaller the granule sizes, the lower is the fragmentation. On the other hand, the smaller the granule sizes, the smaller is the maximum manageable memory segment size. Thus, there is a trade off between the granule sizes and the maximum manageable memory segment size. Therefore, the granule sizes are selected in accordance with the size of memory blocks to be allocated. For example, if the size of requested memory blocks does not exceed 4 Kbytes, a granule of 16 bytes for level 0 permits to support 255 segment sizes ranging from 1 byte to 4 Kbytes. This increases the memory use efficiency considerably.

As indicated above, each level is associated with a table of up to 255 pointers. However, instead of scanning the table of pointers of a level in order to allocate a free a memory segment, a three stage bitmap is used. Thereby, a deterministic behaviour of the memory allocation algorithm is provided. This approach also considerably speeds up the identification of a free memory segment of the right size.

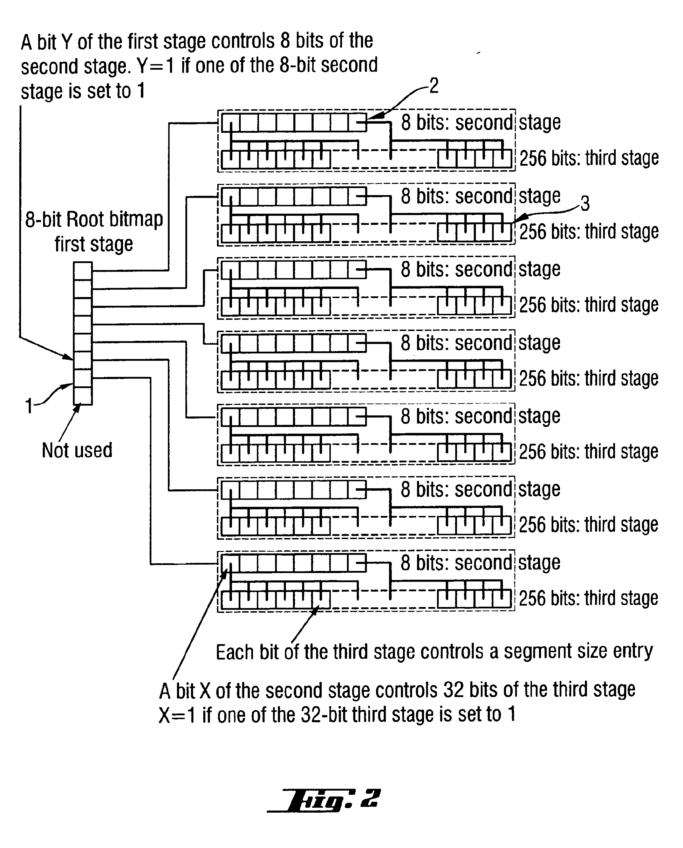

An exemplary three stage bitmap for use in an embodiment of the present invention is illustrated in Figure 2. The bitmap comprises a root bitmap 1 (first stage), a second stage bitmap 2 and a third stage bitmap 3. The root bitmap 1 is an 8-bit word of which each bit controls an associated 8-bit word of the second stage bitmap 2. If one or more bits of an associated 8-bit word of the second stage bitmap 2 is set to 1, the corresponding root bitmap bit is also set to 1. Similarily, each bit of the second stage bitmap 2 is associated with 32 bits of the third stage bitmap 3. If one or more bits of a 32-bit word of the third stage bitmap 3 is set, the corresponding bit of the associated second stage bitmap 2 is also set to 1. Consequently, each bit of the root bitmap 1 represents 256 bits of the third stage bitmap 3. Accordingly, the third stage bitmap 3 comprises 256-bit strings each consisting of eight 32-bit words.

Each bit of the third stage bitmap 3 is associated with an entry in the table of pointers. By using a three stage bitmap, scanning a 256-bit array (i.e. a table of pointers for one level) for free memory segments may be performed by checking only one bit of the root bitmap, as will be described in further detail hereinbelow. Thereby, scanning operations are simplified and sped up considerably.

In the present embodiment, the root bitmap 1 and the second stage bitmap 2 consist of 8-bit words. However, in an alternative embodiment for different applications, the root bitmap and the second stage bitmap may consist of 32-bit words, whereby each bit of the root bitmap represents 1024 bits of the third stage bitmap.

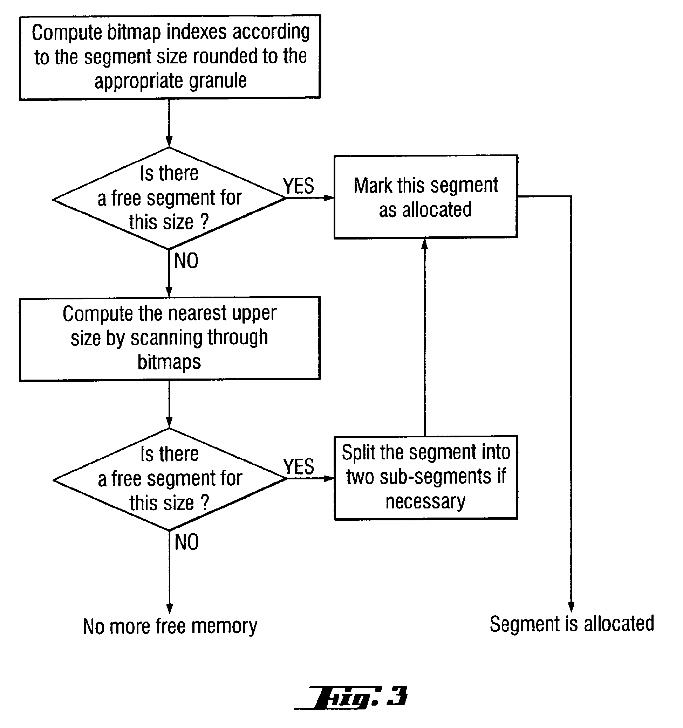

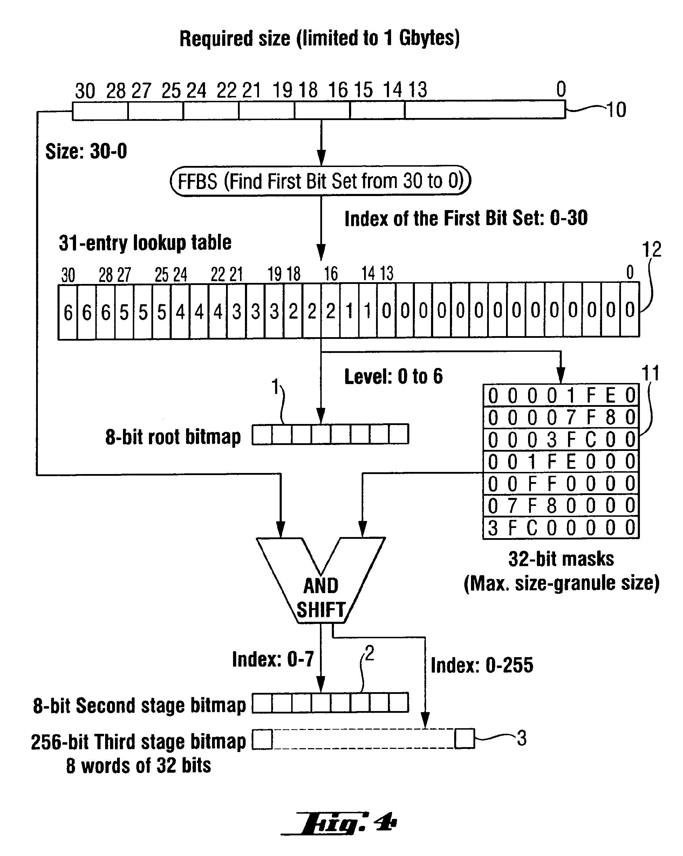

The algorithm of the present embodiment allocates a best fitting memory segment in response to a memory allocation request. The algorithm is illustrated in Figure 3. The size of the requested memory block is contained in a 32-bit word 10, as illustrated in Figure 4. The requested memory block size is rounded up to the nearest factor of the lowest granule size, i.e. 32 bytes in the present embodiment.

A set of seven 32- bit word masks 11 and a lookup table 12 containing 31 entries are used to determine in a single operation the appropriate level and corresponding indexes into the associated bitmaps (root, second and third stage bitmaps). The masks 11 are predetermined and each associated with one of the levels.

The content of the lookup table 12 is computed on initialization. After rounding the requested memory block size in accordance with the smallest granule size, as mentioned above, the highest set bit of the 32-bit word 10 is determined starting from the most significant bit. The highest set bit represents an index to an entry in the lookup table 12 containing the level corresponding to the size of the requested memory block. It also indexes one of the masks 11 which is associated with that level.

The level determined this way indexes an associated bit of the root bitmap 1. If this bit is set to 1, indexes to the first and second stage bitmaps 2, 3 are computed. The indexes to the first and second stage bitmaps 2, 3 are computed by logically combining the content of the 32-bit word 10 and the mask indexed by the lookup table 12. The logical combination is an AND/SHIFT operation.

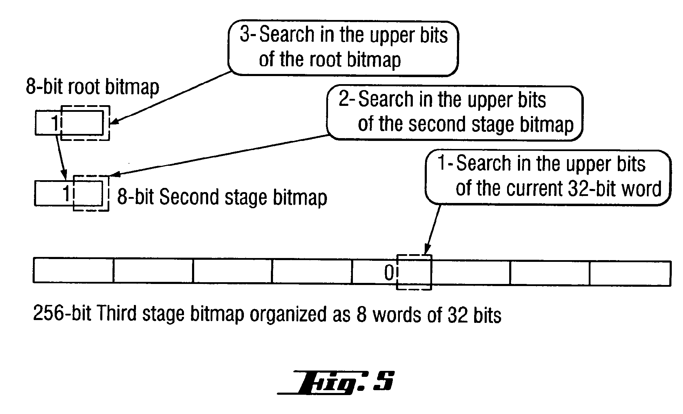

If the indexed bit of the third stage bitmap 3 is set to 1, a free memory segment of the required size has been found. Otherwise, a larger free segment will have to be found and allocated. Searching a larger segment comprises the following steps, as illustrated in Figure 5:

-    Finding the next set bit in the current 32-bit word of the third stage bitmap 3;
-    If no other bit is set in the current third stage 32-bit word, find the next set bit in the current 8-bit word of the second stage bitmap 2;

- If not other bit is set in the current second stage 8-bit word, find the next set bit in the root bitmap 1.

If no other bit is set in the root bitmap 1, there is no free memory segment to satisfy the memory allocation request, and a null pointer is returned.

First Example

In the first example, the overall memory is 1 Gigabyte, all of which is free. A request is received for the allocation of 400 bytes.

In the first step, the size of the requested memory is rounded in accordance with the smallest granule size, i.e. 32 bytes (granule size of level 0). This results in a rounded size of 416 bytes, corresponding to the binary digit 110100000. This binary digit is contained in the 32-bit word 10 (Figure 4).

Subsequently, the highest set bit of the 32-bit word 10 is determined. This is bit no. 8, corresponding to an index to the 8th entry of the lookup table 12. The eight entry of the lookup table 12 indicates the level corresponding to the size of the requested memory block, that is level 0 in the present example. In the next step, the content of the bit of the root bitmap 1 associated with level 0 is determined. In the present example, the level 0 bit of the root bitmap 1 is 0, as the whole memory is free and there is only one free segment of 1 Gigabyte, i.e. all bits of the root bitmap 1 except the most significant one are 0. Due to this result, no AND/SHIFT operation is performed to compute indexes to the second and third stage bitmaps.

As the level 0 bit is 0, the next set bit of the root bitmap 1 is determined. As explained above, this is the highest bit of the root bitmap 1, i.e. that associated with level 6.

Then, the lowest set bit of the second stage bitmap 2 is determined. This is bit no. 7, i.e. the highest significant bit of the second stage bitmap 2. Similarily, the lowest set bit of the 32-bit word of the third stage bitmap 3 associated with bit no. 7 of the second stage bitmap 2 is determined. This is the most significant bit of the 32-bit word, i.e. bit no. 31. This bit is associated with a pointer indicating the physical memory address of the free memory segment to be allocated.

In the present example, the size of the free memory segment is 1 Gigabyte - 1 byte (compare table 1), whereas only 416 bytes are requested. Therefore, the free segment is split into two, that is one allocated segment of the size <448 (see Figure 1) and one new free segment of 1 Gigabyte - (448+1) bytes. The bitmap is updated accordingly.

**Second Example**

In the second example, the overall memory size also 1 Gigabyte. All memory is allocated except one segment in level 0 (say <1024 bytes) and one in level 1 (say <32,768 bytes). A request is received for 18,030 bytes.

In the first step, the request is rounded to 18,048 bytes. This corresponds to the binary digit of 100011010000000. Accordingly, the highest set bit of the 32-bit word 10 is bit no. 15.

In the next step, entry no. 15 of the lookup table 12 is determined. This is an index to level 1, in accordance with the size of the requested memory.

Subsequently, the state of the level 1 bit of the root bitmap 1 is determined. As there is a free memory segment in level 1, this bit is set to 1.

Then, an AND/SHIFT-operation is performed on the binary digit corresponding to the size of the memory request (100011010000000) and the level 1 entry of the masks 11 (11111111000000, corresponding to 7F80). The operation result is 10001101.

The operation results indexes those bits of the second and third stage bitmaps which are associated with a best fitting memory segment size. In this example, this is bit no. 4 of the second stage bitmap 2 and bit no. 13 of 32-bit word of the third stage bitmap 3 associated with bit no. 4 of the second stage bitmap 2. This corresponds to pointer no. 141 (= operation result), indicating the physical memory address of the segment <18,176 bytes being the best fitting size. In particular, the three most significant bits (100) of the operation result correspond to bit no. 4 of the second stage bitmap 2, whereas the five least significant bits of the operation result correspond to bit no. 13 of the third stage bitmap 3.

However, since there is no free memory segment of this size, bit no. 13 of the third stage bitmap is 0. Therefore, the third and second stage bitmaps are searched until a set bit in the third stage bitmap 3 is found, as described above. In the present example, this is the most significant bit of the 32-bit word of the third stage bitmap 3 associated with the most significant bit of the second stage bitmap 2 of level 1, corresponding to a free memory segment of the size <32,768 (pointer no. 256).

Subsequently, this free memory segment is split into two, that is one allocated segment of the size <18,176 bytes, and one new free segment of the size 32,768 - (18,176 + 1) bytes. The bitmap is updated accordingly.

As indicated in the examples, initially, a free memory contains a single free segment, and only one bit is set in each of the root bitmap 1, the second stage bitmap 2 and the third stage bitmap 3.

The third stage bitmap 3 is associated with a table of pointers indicating the address of free memory segments.

The table of pointers is updated in accordance with the third stage bitmap.

When a free memory segment is to be allocated and the segment is larger than the requested memory, it is split into two sub-segments according to the requested size. If the free sub-segment is to be allocated but is also too large, it can be split again and so forth.

The algorithm response time only depends on the bitmap scanning operation. The root bitmap 3 allows for the determination of the availability of a free segment in each level in a single operation.

Both the memory allocation and release operation are deterministic and symmetrical, as they do not depend on the number of free or allocated segments, or upon the size of the requested memory. Both operations do not exceed a maximum time and are fully predictable.

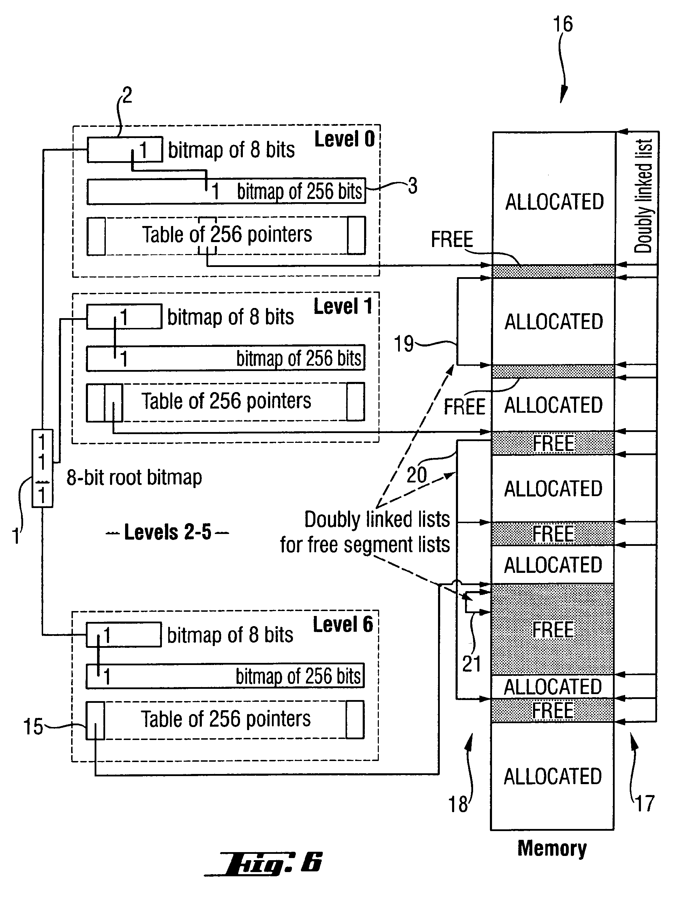

Referring to Figure 6, a data structure used in the embodiment of the invention is described. Figure 6 illustrates the root bitmap 1, the second and third stage bitmaps 2, 3 in each of the seven levels, as well as a table of pointers 15 associated with the third stage bitmap 3 of each level.

A memory 16 consists of free and allocated memory segments. Memory segments are linked using a first and a second doubly linked list 17, 18. The first doubly linked list 17 links all segments of the memory, regardless of state (free, allocated). The second doubly linked list 18 links free memory segments of the same size.

In the first doubly linked list 17, the order of segments accords with their physical memory addresses. The second doubly linked list 18 includes a number of lists each linking free segments of the same size. Each of these lists is organised as a LIFO (Last In First Out) list.

The first doubly linked list 17 is updated each time a free segment is split (as described above) or free segments are merged (as described below). The second doubly linked list is updated each time a memory segment is freed or allocated, and also when a free segment is split or free segments are merged. When a segment is freed, the new free segment is added to the LIFO list corresponding to the size of the free segment. When a free segment is allocated, it is removed from the LIFO list corresponding to its size. When a free segment is split into two sub-segments, the free segment is removed from its LIFO list, and the new free sub-segment is added to another LIFO list according to its size. When free segments are merged, they are removed from their respective LIFO lists, and the new merged free segment is added to another LIFO list according to its size. In each case, the bitmap is updated accordingly.

In Figure 6, the second doubly linked list 18 includes three lists 19, 20 and 21 associated with level 0, 1 and 6, respectively.

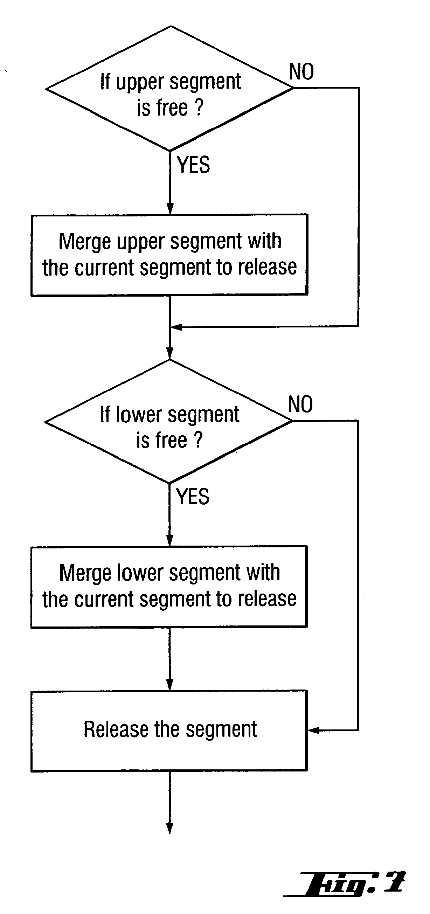

As indicated above, when a memory segment is freed, it is merged with neighboured free segments in order to form a larger free segment. The underlying algorithm is illustrated in Figure 7. When a segment is freed, the state of the neighboured segments is determined. If both neighboured segments are free, all three segments are merged. If only one of the neighboured segments is free, then the two free segments are merged. If no neighboured segment is free, no merge operation is performed. As a consequence, there are never any neighboured free segments, as these are merged on freeing one of the segments.

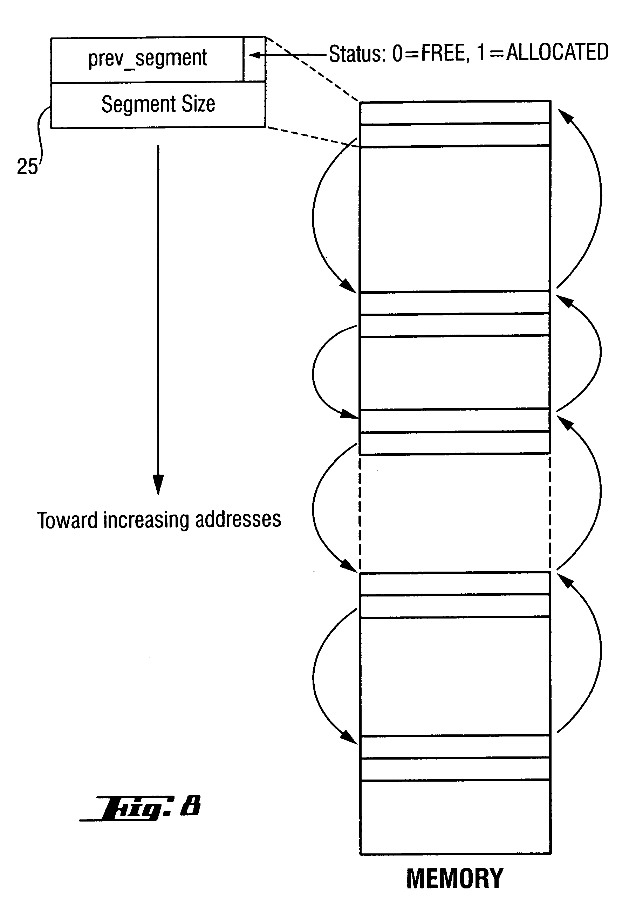

The state of neighboured segments is determined using the first doubly linked list. The structure of the first doubly linked list 17 is illustrated in Figure 8. Each memory segment has a header 25 which includes information on the state of the segment (free, allocated) and the size of the segment, as well as a pointer pointing to the previous segment. In particular, the state of the segment is indicated by the lowest significant bit of the pointer. A pointer to the subsequent segment is not necessary as its address can be determined from the segment size.

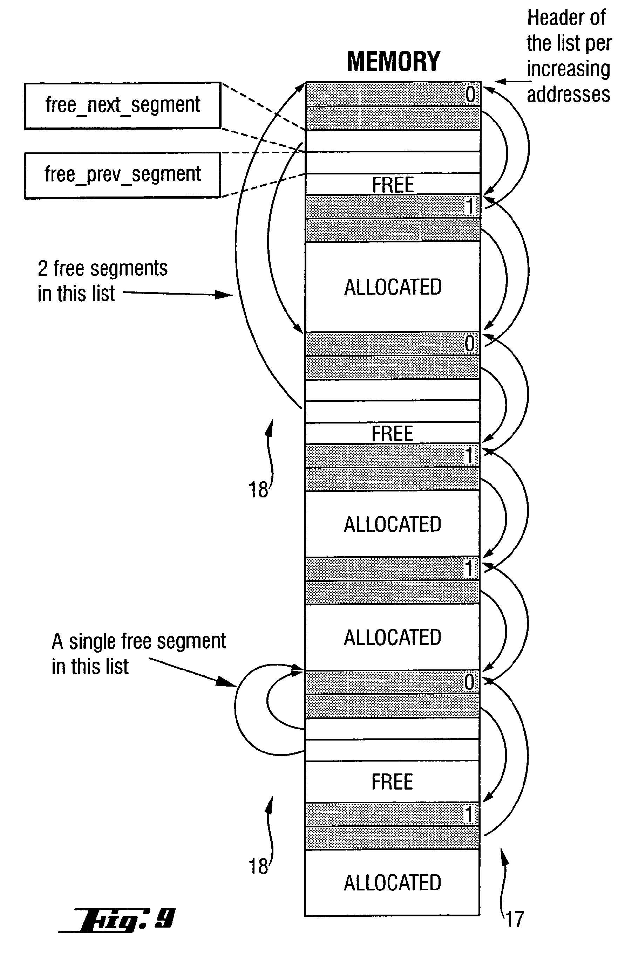

Figure 9 illustrates a data structure including the first and second doubly linked lists 17, 18. In particular, Figure 9 illustrates that the first doubly linked list links all segments, whereas the second doubly linked list 18 links free segments of the same size only. Therefore, the header 25 of a free segment includes additional pointers to the next and the previous free segments of the same size. If there is only a single free segment of any given size, these pointers form a loop and point to the header 25 of that single segment.

The header 25 consists of 8 bytes for an allocated segment, and of 12 bytes for a free segment; in the latter case, the additional bytes contain information on other free segments of the same size thereby to form the second doubly linked list 18, as described above.

It is noted that in the above description of the allocation of a best fitting memory segment, the memory additionally required to form the header 25 is disregarded for the sake of simplicity.

Table 2 illustrates the memory consumed by the bitmaps and tables of pointers used in the present memory allocation algorithm for different memory pool sizes, provided the granule size for each level is selected in accordance with table 1:

Table 2: Memory consumed by tables of pointers and bitmaps

| Memory pool size | Tables of pointers | Bitmaps | Total |
|---|---|---|---|
| 32 Kbytes | 2 Kbytes | 67 bytes | 2115 bytes |

Table continued

| Memory pool size | Tables of pointers | Bitmaps | Total |
|---|---|---|---|
| 256 Kbytes | 3 Kbytes | 100 bytes | 3172 bytes |
| 2 Mbytes | 4 Kbytes | 133 bytes | 4229 bytes |
| 16 Mbytes | 5 Kbytes | 166 bytes | 5286 bytes |
| 128 Mbytes | 6 Kbytes | 199 bytes | 6343 bytes |
| 1 Gbyte | 7 Kbytes | 232 bytes | 7400 bytes |

In addition, two tables of 256 bytes are required to perform computations to determine the first set bit starting from the least and from the most significant bit, respectively. Thus, an additional 512 bytes are required. Further, the doubly linked lists 17, 18 consume 8 bytes per allocated or 12 bytes per free segment.

Table 3 indicates the response times (in nano seconds) on different processors of the present algorithm when performing allocation and release operations:

Table 3: Response time on different processors

| | Intel i486 33MHz | Pentium 300 MHz | PowerPC 300 MHz |
|---|---|---|---|
| Clock accuracy | +/- 838 | +/- 3 | +/- 60 |
| **Allocate** | | | |
| Alloc Exact Matching | 7000 | 390 | 240 |
| Alloc SCBM | 15,000 | 865 | 540 |
| Alloc SUBM | 17,000 | 1,074 | 554 |
| Alloc SRBM | 17,000 | 1,144 | 600 |
| **Free** | | | |
| Free, no merge | 6,000 | 307 | 224 |
| Free, merge 1 neighbour | 10,000 | 349 | 420 |
| Free, merge 2 neighbours | 14,000 | 795 | 600 |

As indicated in Table 3, there are three instruction paths for allocating a segment:

- SCBM (Scan Current 32-bit word of the third stage BitMap). In this case, a free segment is found in the current 32-but word of the third stage bitmap 3 (compare Figure 5).
- SUBM (Scan Upper level of the BitMap). In this case, there is no free segment in the current 32-bit word of the third stage bitmap 3, and the current second stage bitmap 2 is scanned to find a free segment (see also Figure 5).
- SRBM (Scan Root BitMap). In this case, there is no free segment in the current 32-bit word of the third stage bitmap 3, nor the current second stage bitmap 2. A free segment is found by scanning the root bitmap 1.

There are also three instructions paths for releasing (freeing) a segment:

- Free a segment while both neighboured segments are allocated. No merge operation is performed. It is therefore the fastest path.
- Free a segment while there is one free neighbour. One merge operation is performed.
- Free a segment while both neighboured segments are free. Two merge operations are performed. This is therefore the slowest path.

Each response time of Table 3 is a mean value of 1000 operations. Worst cases are about two to three times slower than the respective best case (i.e. exact matching when allocating segment; no merging when freeing a segment). However, for an overall memory not exceeding 1 Gbyte, the response time never exceeds 17,000 ns on a 33 MHz i486 processor, 1,144 ns on a 300 MHz Pentium processor, and 600 ns on a 300 MHz PowerPC processor, regardless of the number of free or allocated segments or the size of the requested memory. Accordingly, the present algorithm is deterministic and predictable.

It should be noted that the invention is not limited to the above described exemplary embodiment and it will be evident to a skilled person in the art that various modifications may be made within the scope of protection as determined from the claims.

**Claims**

1. A method of processing requests for the allocation of a memory block of a data memory, wherein segments of the data memory are allocated to different levels according to their size, the method comprising the steps of:

   (a) receiving a request for the allocation of a memory block;
   (b) determining the lowest of said levels containing a segment of the same size as or larger than the requested memory block;
   (c) determining, in the level determined in step (b), the availability of a free segment of a size the same as or larger than the requested memory block; and
   (d) depending on the determination in step (c), allocating a free segment.

2. The method of claim 1, further comprising:

   (e) repeating steps (c) and (d) for the next higher level if no free segment of a size the same as or larger than the requested memory block has been found in step (c); and
   (f) repeating step (e) until a free segment has been allocated or there is no next level.

3. The method of claim 1 or 2, wherein each level is associated with a different granule size to the power of two, and the sizes of memory segments allocated to a level are related to the granule size of the respective level.

4. The method of claim 3, wherein the granule size associated with a level defines the size difference between memory segments allocated to that level.

5. The method of claim 4, wherein step (a) further comprises rounding the requested memory block to the lowest granule size before performing steps (b) to (d).

6. The method of any preceding claims, wherein each level is associated with a table of pointers indicative of memory addresses of free memory segments of a size allocated to the respective level.

7. The method of any preceding claim, wherein step (d) comprises returning a pointer to the allocated free segment.

8. The method of any preceding claim, wherein (d) comprises returning a null pointer if no free segment is allocated.

9. The method of any preceding claim, wherein a bitmap is indicative of the state of memory segments (free, allocated), the bitmap comprising a root bitmap, each bit of the root bitmap being indicative of whether or not an associated one of said levels contains at least one free segment, and wherein step (b) further comprises determining from the root bitmap said lowest level containing a segment of a size the same as or larger than the requested memory block

10. The method of any preceding claim, wherein step (a) comprises receiving a binary data set indicative of the size of the requested memory block, wherein each bit of the binary data set is associated with an entry of a lookup table associated with one of said levels, and step (b) comprises determining the most significant set bit of the binary data set, and determining from the entry of the lookup table associated with the most significant set bit the lowest of said levels containing a segment of a size the same as or larger than the requested memory block.

11. The method of claims 9 and 10, wherein each mask of a set of predetermined masks is associated with one of said levels, and step (c) further comprises performing a logic operation on the mask associated with the lowest level determined in step (b) and said binary data set, wherein the operation result is an index to bits of the bitmap indicative of the state of a segment of a size the same as or larger than the requested memory block.

12. The method of claim 11, wherein said bitmap comprises a plurality of second and third stage bitmaps, each bit of the root bitmap being indicative of the state of the bits of an associated one of said second stage bitmaps, each bit of said second stage bitmaps being indicative of the state of an associated predetermined number of bits of one of said third stage bitmaps, and each bit of the third stage bitmap being indicative of whether or not an associated segment is free, and wherein the operation result is an index to one bit of the second stage bitmap and one bit of said predetermined number of bits of the third stage bitmap associated with said one bit of the second stage bitmap, said one bit of the third stage bitmap being indicative of the state of a segment of a size the same as or larger than the requested memory block.

13. The method of claim 12, wherein step (c) further comprises, if no free segment is found, repeating the determination for the next more significant bit of said predetermined number of bits of the third stage bitmap, until a free segment is found or there is no more significant bit of said predetermined number of bits of the third stage bitmap.

14. The method of claim 13, wherein step (c) further comprises, if no free segment is found, repeating the determination for the predetermined number of bits of the third stage bitmap associated with the next more significant set bit of the second stage bitmap, until a free segment is found or there is no more significant bit of said one second stage bitmap.

15. The method of claim 14, wherein step (c) further comprises, if no free segment is found, repeating the determination for the second stage bitmap associated with the next more significant set bit of the root bitmap, until a free segment is found or there is no more significant bit of the root bitmap.

16. The method of claims 12 and 15, wherein each bit of the third stage bitmaps is associated with an entry in a table of pointers indicative of memory addresses of free memory segments.

17. A method of managing a data memory, the method comprising:

defining a number of levels of the data memory;
defining a different granule size for each level;
defining a different range of a plurality of different sizes of memory segments for each level, wherein the size of each memory segment is related to the granule size of the respective level, and wherein a request for the allocation of a memory block is processable by determining a level containing segments of the same size as or larger than the requested memory block, and allocating a free segment of a size the same as or larger than the requested memory block in that level.

18. The method of claim 17, wherein the granule size defines the size difference between memory segments in each level.

19. The method of claim 17 or 18, further comprising:

generating a bitmap indicative of the state of each segment (free, allocated) and of whether or not a level contains at least one free segment.

20. The method of claim 19, wherein the bitmap comprises a root bitmap, each level being associated with one bit of the root-bitmap, and a plurality of second and third stage bitmaps associated with the segments, each bit of the root bitmap being indicative of the state of the bits of an associated one of said second stage bitmaps, and each bit of said second stage bitmaps being indicative of the state of an associated predetermined number of bits of one of said third stage bitmaps.

21. The method of claim 19 or 20, further comprising:

updating the bitmap when a segment is allocated.

22. The method of claim 19, 20 or 21, further comprising:

updating the bitmap when a segment is freed.

23. The method of any of claims 17 to 22, further comprising generating a table of pointers for each level indicative of memory addresses of free memory segments of a size associated with the respective level.

24. The method of claim 23 as dependent on any of claims 19 to 22, wherein each bit of the third stage bitmaps is associated with an entry in the tables of pointers.

**25.** The method of any of claims 17 to 24, further comprising:

generating a lookup table, wherein each entry of the lookup table is associated with a bit of a binary data set indicative of the size of the requested memory block and indicative of one of said levels.

**26.** The method of any of claims 17 to 25, further comprising:

generating a set of masks, wherein each of the set of masks is associated with one of said levels, and wherein a logical operation of a binary data set indicative of the size of the requested memory block and the mask associated with a level containing segments of the same size as or larger than the requested memory block results in an index to a segment of a size the same as or larger than the requested memory block in that level.

**27.** A method of managing a data memory comprising memory segments of different sizes for allocation in response to a memory allocation request, the method comprising:

creating a first doubly linked list of consecutive memory segments irrespective of size and status (free, allocated); and
creating a second doubly linked list of free memory segments of the same size.

**28.** The method of claim 27, wherein memory segments in the first doubly linked list are arranged in the order of associated memory addresses.

**29.** The method of claim 27 or 28, further comprising, when freeing a memory segment:

determining the state of memory segments adjacent to the memory segment to be freed using the first doubly linked list;
merging the memory segment to be freed with free adjacent memory segments; and
updating the first and second doubly linked lists accordingly.

**30.** The method of any of claims 27 to 29, wherein each second doubly linked list is a LIFO (Last In First Out) list.

**31.** The method of any of claims 27 to 30, comprising updating the second doubly linked list upon allocation of a memory segment upon request.

**32.** The method of any of claims 27 to 31, further comprising, if a segment determined for allocation upon request is larger than a requested memory block:

allocating a portion of the determined segment large enough to satisfy the request;
providing the remaining portion as a new free memory segment; and
updating the first and second doubly linked lists accordingly.

**33.** The method of any of any of claims 27 to 32, wherein each segment is associated with a header, thereby to form the first doubly linked list, each header including information indicative of the size of the associated segment, information indicative of the state (free, allocated) of the associated segment, and a pointer indicative of the memory address of the previous segment.

**34.** The method of claims 30 and 33, wherein the header associated with each free segment of a given size further includes a pointer indicative of the memory address of a previous and/or subsequent free segment of the same size, depending on the availability of a previous and/or subsequent free segment of the same size and in accordance with the order of free segments of the same size in the LIFO list.

**35.** A method of managing a data memory, the method comprising:

allocating free segments of the data memory to different levels according to their size; and
providing a bitmap comprising different stages, wherein the bits of one stage are indicative of the availability of free segments in said levels, and the bits of another stage are indicative of the state and/or size and/or location of individual segments.

**36.** The method of claim 35, wherein the bits of one stage are associated with pointers indicative of the memory address of free segments.

**37.** The method of claim 35 or 36, further comprising:

updating the bitmap to reflect the allocation or release of memory segments.

**38.** A method of managing a data memory, including freeing and allocating segments of the data memory, the method comprising, when freeing a memory segment:

determining the state of memory segments adjacent to the memory segment to be freed; and
merging the memory segment to be freed with free adjacent memory segments.

**39.** A method of managing a data memory, including the method of any of claims 17 to 26 and/or claims 27 to 34 and/or claims 35 to 37 and/or claim 38.

**40.** An operating system for a computer, adapted to perform the method of any preceding claim.

**41.** The operating system of claim 40, wherein the operating system is a realtime operating system.

**42.** The operating system of claim 40 or 41, adapted to perform the method of any of claims 1 to 39 at task level.

**43.** The operating system of any of claims 40 to 42, adapted to perform the method of any of claims 1 to 39 at interrupt level.

**44.** A computer program adapted to perform the method of any of claims 1 to 39 when operated on a computer.

**45.** A storage medium having stored thereon a set of instructions, which when executed by a computer, performs the method of any of claims 1 to 39.

**46.** A computer system programmed to perform the method of any of claims 1 to 39.

**47.** A processor arranged to perform the method of any of claims 1 to 39.

| <64B | 64-127 B | 128-255 B | 256-511 B | 512-1K-1 | 1K-2K-1 | 2K-4K-1 | 4K-8K-1 |
|---|---|---|---|---|---|---|---|
| <64 | <128 | <256 | <512 | <1024 | <2048 | <4096 | <8192 |
| **1** | <96 | <224 | <480 | <992 | | | |
| | **2** | <192 | <448 | <960 | | | |
| | | <160 | <416 | <928 | | | |
| | | **4** | <384 | <896 | | | |
| | | | <352 | <864 | | | |
| | | | <320 | <832 | | | |
| | | | <288 | <800 | | | |
| | | | **8** | <768 | | | |
| | | | | <736 | | | |
| | | | | <704 | | | |
| | | | | <672 | | | |
| | | | | <640 | | | |
| | | | | <608 | | | |
| | | | | <576 | | | |
| | | | | <544 | | | |
| | | | | **16** | | | |
| | | | | | <1056 | <2080 | <5128 |
| | | | | | **32** | **64** | **128** |

Fig. 1

A bit Y of the first stage controls 8 bits of the
second stage. Y=1 if one of the 8-bit second
stage is set to 1

2

8 bits: second stage

256 bits: third stage

8 bits: second stage 3

256 bits: third stage

8 bits: second stage

256 bits: third stage

8 bits: second stage

256 bits: third stage

8 bits: second stage

256 bits: third stage

8 bits: second stage

256 bits: third stage

8 bits: second stage

256 bits: third stage

8-bit Root bitmap
first stage

1

Not used

Each bit of the third stage controls a segment size entry

A bit X of the second stage controls 32 bits of the third stage
X=1 if one of the 32-bit third stage is set to 1

*Fig. 2*

```
┌─────────────────────────────┐
│  Compute bitmap indexes      │
│  according to the segment    │
│  size rounded to the         │
│  appropriate granule         │
└─────────────────────────────┘
              │
              ▼
        ╱─────────╲
       ╱  Is there  ╲        YES    ┌──────────────────┐
      ╱ a free segment ╲────────────▶│  Mark this segment │
      ╲   for this size? ╱           │   as allocated     │
       ╲─────────╱                   └──────────────────┘
            │NO                              ▲
            ▼                                │
┌─────────────────────────────┐             │
│  Compute the nearest upper   │             │
│  size by scanning through    │             │
│  bitmaps                     │             │
└─────────────────────────────┘             │
            │                                │
            ▼                                │
        ╱─────────╲                          │
       ╱  Is there  ╲        YES    ┌──────────────────┐
      ╱ a free segment ╲────────────▶│ Split the segment │
      ╲   for this size? ╱           │ into two sub-     │
       ╲─────────╱                   │ segments if       │
            │NO                      │ necessary         │
            ▼                        └──────────────────┘
  No more free memory                  Segment is allocated
```

Fig. 3

**Required size (limited to 1 Gbytes)**

30  28 27  25 24  22 21  19 18  16 15  14 13                    0

~10

Size: 30-0

FFBS (Find First Bit Set from 30 to 0)

**Index of the First Bit Set: 0-30**

**31-entry lookup table**

12

30      28 27    25 24    22 21    19 18    16    14 13                            0

| 6 | 6 | 6 | 5 | 5 | 5 | 4 | 4 | 4 | 3 | 3 | 3 | 2 | 2 | 2 | 1 | 1 | 0 | 0 | 0 | 0 | 0 | 0 | 0 | 0 | 0 | 0 | 0 | 0 | 0 | 0 |

**Level: 0 to 6**

11

| 0 | 0 | 0 | 0 | 1 | F | E | 0 |
| 0 | 0 | 0 | 0 | 7 | F | 8 | 0 |
| 0 | 0 | 0 | 3 | F | C | 0 | 0 |
| 0 | 0 | 1 | F | E | 0 | 0 | 0 |
| 0 | 0 | F | F | 0 | 0 | 0 | 0 |
| 0 | 7 | F | 8 | 0 | 0 | 0 | 0 |
| 3 | F | C | 0 | 0 | 0 | 0 | 0 |

1

**8-bit root bitmap**

**32-bit masks**
**(Max. size-granule size)**

AND
SHIFT

**Index: 0-7**  2  **Index: 0-255**

**8-bit Second stage bitmap**

**256-bit Third stage bitmap**
**8 words of 32 bits**

~3

*Fig. 4*

8-bit root bitmap

3- Search in the upper bits of the root bitmap

1

2- Search in the upper bits of the second stage bitmap

1  8-bit Second stage bitmap

1- Search in the upper bits of the current 32-bit word

0

256-bit Third stage bitmap organized as 8 words of 32 bits

*Fig. 5*

**Fig. 6**

*Fig. 7*

prev_segment — Status: 0=FREE, 1=ALLOCATED

Segment Size

25

Toward increasing addresses

Fig. 8

MEMORY

**MEMORY**

Header of
the list per
increasing
addresses

free_next_segment

free_prev_segment

2 free segments
in this list

FREE

ALLOCATED

FREE

ALLOCATED

ALLOCATED

A single free segment
in this list

FREE

ALLOCATED

18

18

17

_Fig. 9_

European Patent Office

**EUROPEAN SEARCH REPORT**

Application Number

EP 04 29 0405

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 784 699 A (MCMAHON ET AL) 21 July 1998 (1998-07-21) | 1,2,6-9, 11-16, 27-40, 44-47 | G06F12/02 |
| Y | * column 2, line 66 - column 33, line 67 * | 19-25 | |
| A | * column 5, line 22 - line 39 * | 3-5,10, 17-26 | |
| | * column 7, line 5 - column 8, line 8 * * column 11, line 13 - line 39 * ----- | | |
| X | BOZMAN G ET AL: "Analysis of free-storage algorithms-revisited" IBM SYSTEMS JOURNAL, IBM CORP. ARMONK, NEW YORK, US, vol. 23, no. 1, 1984, pages 44-64, XP002214576 ISSN: 0018-8670 | 1-8,17, 18,39, 40,44-47 | |
| Y | * page 54, right-hand column, line 21 - line 50 * ----- | 19-25 | |
| X | OGASAWARA T: "An algorithm with constant execution time for dynamic storage allocation" REAL-TIME COMPUTING SYSTEMS AND APPLICATIONS, 1995. PROCEEDINGS., SECOND INTERNATIONAL WORKSHOP ON TOKYO, JAPAN 25-27 OCT. 1995, LOS ALAMITOS, CA, USA,IEEE COMPUT. SOC, US, 25 October 1995 (1995-10-25), pages 21-25, XP010196652 ISBN: 0-8186-7106-8 * page 23, left-hand column, line 53 - right-hand column, line 46 * ----- | 1,2,6,7, 27-34, 38-47 | **TECHNICAL FIELDS SEARCHED** (Int.Cl.7) G06F |

The present search report has been drawn up for all claims

| Place of search | Date of completion of the search | Examiner |
|---|---|---|
| The Hague | 5 October 2005 | Nielsen, O |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                                 
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 04 29 0405

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2005

| Patent document cited in search report | Publication date | Patent family member(s) | Publication date |
|---|---|---|---|
| US 5784699 A | 21-07-1998 | NONE | |

EPO FORM P0459

For more details about this annex : see Official Journal of the European Patent Office, No. 12/82